# EUROPEAN PATENT SPECIFICATION

(11) **EP 0 228 074 B1**
(45) Date of publication and mention of the grant of the patent: **15.12.1993**
(21) Application number: 86117958.8
(22) Date of filing: 23.12.1986
(51) Int. Cl.: A23B 7/10, A23L 1/218

(54) **A method for producing fermented vegetables in a bran paste**
Verfahren zur Herstellung von fermentiertem Gemüse in Kleiebrei
Procédé de fabrication de légumes fermentés dans une pâte de son

(30) Priority: 28.12.1985 JP 298886/85; 31.01.1986 JP 13016/86 U
(43) Date of publication of application: 08.07.1987
(73) Proprietor: ISOTEC CO., LTD., Yokohama-shi Kanagawa Prefecture (JP)
(72) Inventor: Inomata, Hidesaburo, Yokohama-shi Kanagawa pref. (JP)
(74) Representative: Wagner, Karl H., Dipl.-Ing.

(56) References cited:
- WO-A-82/00081
- GB-A- 1 424 078
- PATENT ABSTRACTS OF JAPAN, vol. 10, no. 377 (C-392)[2434], 16 December 1986#
- PATENT ABSTRACTS OF JAPAN, vol. 9, no. 41 (C-267)[1764], 21 February 1985#

## Description

### BACKGROUND OF THE INVENTION

### FIELD OF THE INVENTION

The present invention relates to a method for producing fermented vegetables in a bran paste, wherein a fermenting bran paste bed which is a fermenting basic material can be automatically controlled to continually produce satisfactory fermented vegetables or products, and more particularly, to such a method wherein the appropriate stirring of a bran paste bed can be automatically controlled and further the adjustment of temperature thereof can also automatically controlled as required to produce satisfactory fermented vegetables or products in a desired time.

### DESCRIPTION OF THE PRIOR ART

From of old, products fermented in a bran paste is the most valuable foods in a home, and particularly, the fermenting bran paste bed which is a basic material is inherited as a heirloom from a housewife to her daughter or a daughter-in-law.

Such fermented vegetables or products are produced by first preparing a fermenting bran paste through the fermentation causing various tastes from a mixture of a rice bran, cooled hot water and a suitable amount of salt, and then throwing materials such as fresh vegetables into the bran paste. This fermetation is basically by lactic acid bacteria, but in addition to such lactic acid bacteria, yeast fungi also take part in this fermentation. For this reason, the resulting pickled vegetables or products have a complicated unique flavor and taste.

For taste foods, the standards for estimating the commercial articles of fermented products are as follows:
(a) The color tone and the appearance
(b) The smell and the flavor
(c) The taste
(d) The tooth feel and the touch
(e) They contain minerals, vitamines and the like and have a higher nutritive value, and
(f) They richly contain good quality dietary fibers

Lactic acid bacteria belong, in biological classification, to a bacterium group (protoplasm nuclear cell organisms) in lower microbes in a general biological field and a protist field, and the bacterium group is classified into about 1200 types. Amoung them, particularly those related to the fermented products are Leuconostoc, Pediococus, Lactobacillus and the like. On the other hand, yeast fungi belong to fungus group in higher microbes in a protist field and are of several types amoung true fungi further classified into ascus oogonium yeast fungi and apospory ascus yeast fungi.

The first step in which the bran paste is produced is to ferment lactic acid bacteria, wherein the appropriate temperature is of 20 to 30^{o}C and the PH may be on the order of 5 to 4 after the lapse of several days. During this period, the growth of other bacteria is inhibited by salt and lactic acid. Thereafter, the fermentation by yeast fungi is added, wherein the appropriate temperature therefor also increases to 30 to 50^{o}C, whereby the production of alcohols, higher alcohols and esters is added, thus permiting a complicated high grade flavor to be applied. This step is a sequence of complicated metabolisms all by organisms. For an energy or nutritive source required therefor, a rice bran is material superior to any others, because the rice bran contains all of vitamines required for the propagation of lactic acid bacteria, such as calcium pantothenate, nicotinic acid, biotin, pyridoxine-HCl, pyridoxal-HCl, pyridoxamine-2HCl, P-amino-benzoic acid, folic acid, and essential amino acids including L-glutamic acid, L-histidine-HCl, L-tryptophane, DL-valine, L-arginine-HCl, L-aspartic acid, L-cysteine-HCl, L-leucine, DL-methionine, L-phenylalanine, and L-tyrosine. For this reason, the lactic acid bacteria will rapidly propagate, and on the other hand, a large amount of vitamine B is created. Of course, the action of enzyme and coenzyme is important in this reaction sequence.

It follows from the foregoing that the products fermented in the bran paste as well as the bran paste are themselves living things. In other words, the products fermented in the bran paste or the bran paste are extremely unstable in a substantially continual sequence of metabolisms by organisms.

Such products fermented in the bran paste (including the bran paste) have the following essences:
(1) Intrinsically, they are not to be exhibited for sale as commercial articles at a shop front.
(2) In order to propagate only lactic acid bacteria which are aerobic bacteria and to inhibit the growth of other unrequired anaerobic bacteria such as butyric acid bacteria, it is necessary to force air into the bran paste bed and to withdraw the gases produced in the bran paste bed. To achieve this, the bran paste must be stirred several times in a day, which is troublesome.
(3) Since numberless bacteria or yeast are always present in the surroundings, it is impossible to know when the bran paste become rotten. Therefore, it is required to observe the bran paste constantly, resulting in an extremely troublesome maintenance.

### SUMMARY OF THE INVENTION

It is an object of the present invention to provide a method for producing fermented vegetables in a bran paste, wherein the disadvantages found in the above-described prior art, i.e., in a manual operation are overcome, and a manual stirring operation requiring several times for every day and most difficult to artificially control is eliminated, and wherein as required, the proper envelomental temperature is controlled at a previously defined value in a time series manner, whereby the rate in production is controlled to match to a predetermined time required to finish a product.

To accomplish the above object, according to the present invention, there is provided a method for producing fermented vegetables in a bran paste which comprises:
charging a bran paste containing lactic acid bacteria into a vessel having no slats in the inside thereof,
throwing vegetables to be fermented into the bran paste, placing the vessel on a rotary member connected with a rotary drive and adapted to be rotated by the rotary drive, rotating the vessel placed on the rotary member through the rotation of the rotary member, and
rotating and stirring the bran paste within the vessel while swirling inwardly and continually generating suitable rents or separations and divisions.

Further, the method according to the present invention may include a step of adjusting the envelomental temperature of the vessel at any place of the vessel with a temperature adjuster so that the bran paste in the vessel can be constantly maintained at a desired temperature.
with such method, the stirring of the bran paste or the adjustment in temperature as required can be automatically achieved in accordance with a desired program, whereby the finishing time can be freely controlled while leaving the resulting various fermented products satisfactory in taste. Therefore, the method is extremely useful in practical use.

The above and other objects, features and advantages of the invention will become apparent from reading of the following description of the preferred embodiments taken in conjunction with the accompanying drawings.

### BRIEF DESCRIPTION OF THE DRAWINGS

Fig.1 is a front view of an apparatus according to one embodiment of practising the method of the present invention;
Fig.2 is a perspective view, particularly, illustrating a rotational control unit and a temperature adjuster in the apparatus;
Fig.3 is a perspective view of the apparatus shown in Fig.1;
Fig.4 is schematic diagram illustrating the stirred state of a bran paste within a vessel;
Fig.5 is a diagrammatic view of an apparatus according to another embodiment of practising the method of the present invention;
Fig.6 is a perspective view illustrating a rotary drive, a rotary member and a vessel in the apparatus shown in Fig.5; and
Fig.7 is a perspective view of the apparatus shown in Fig.5.

### DESCRIPTION OF THE PREFERRED EMBODEIMENTS

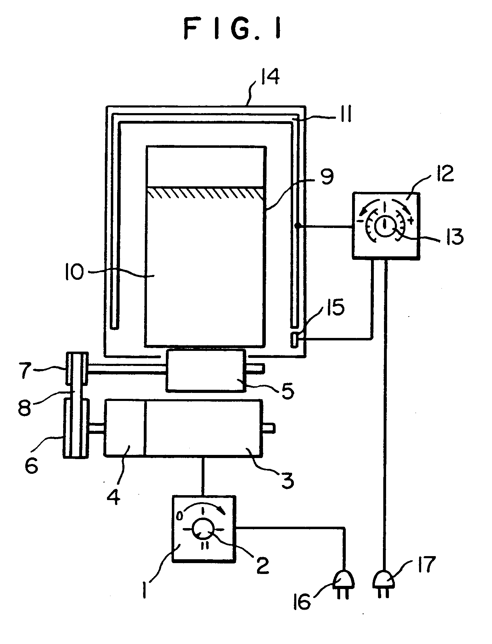

Referring to Figs.1 to 4, there is shown an apparatus for producing vegetables fermented in a bran paste in accordance with one embodiment of practising the method of the present invention, which comprises a rotational control unit 1 including a control 2, and a rotary drive 3 such as a motor or the like connected to the rotational control unit 1.

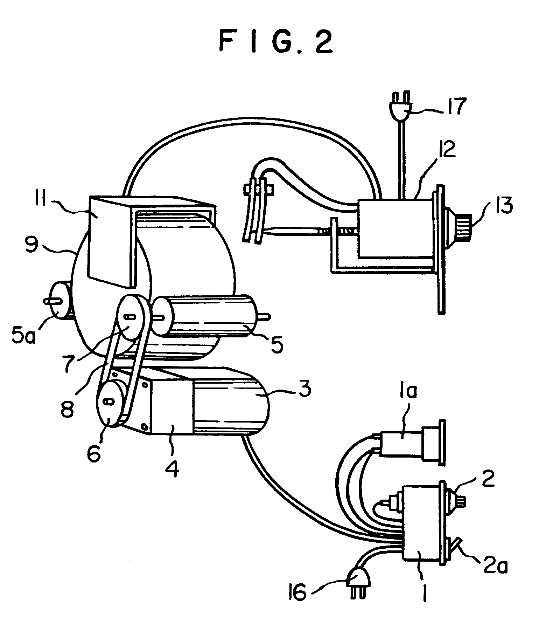

The control unit 1 includes means for shifting the number of rotations and a timer, and is designed to freely control the rotational speed, operating time, intermittent rotation, switching interval and the like of the rotary drive 3 by the operation of the control 2. Also included in the rotational control unit 1 is a control circuit which permits the number of rotations of the rotary drive 3 to be changed by a variable resistor connected to the control 2 in combination with a capacitor 1a. The reference numeral 2 is a switch, and the numeral 4 is a gear box which changes the rotational speed of the rotary drive 3 as required. The reference numeral 5 is a rotary member, for example, a rubber roller, which is connected to the rotary drive 3 by operatively interconnecting pulleys 6 and 7 through a belt 8, as shown in Figs.1 and 2, so that the rotation is transmitted from the rotary drive 3 via the pulley 6, the belt 8 and the pulley 7 to rotary member 5. Of course, this rotation is controlled by the rotation of the rotary drive 3. It should be noted that a rubber roller 5a shown in Fig.2 serves as a mere roller even if it is not operatively connected directly to the rotary drive 3.

The reference numeral 9 is a vessel filled with a bran paste 10. The vessel 9 is placed on the rotary member 5 and held thereon for rotation through the rotation of the rotary member 5. This permits the vessel 9 to be rotated in accordance with the rotational speed of the rotary member 5.

The reference numeral 11 is a temperature adjuster such as a thermo-module, and the numeral 12 is a control section including a known rectifier in the interior thereof and a control 13 on the exterior thereof to enable the selective changing of the direction of a D.C. output current from the rectifier.

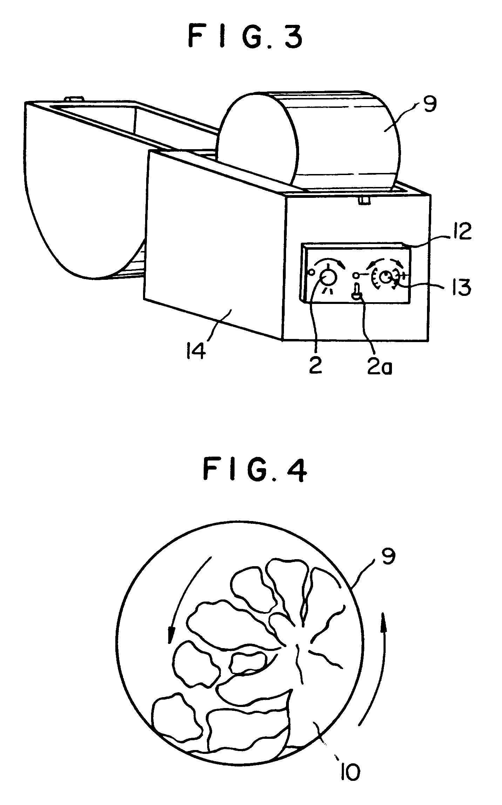

The apparatus practising the present invention is usually contained within an envelope 14, as shown in Fig.3, and is automatically controlled in temperature by a temperature sensor 15 such as a thermostat so that the bran paste 10 within the vessel 9 can be constantly maintained at a desired temperature. Each of the reference numerals 16 and 17 is a plug socket.

With the above apparatus practising the present invention, the vessel 9 filled with the bran paste 10 is rotated in accordance with any rotation of the rotational control unit 1 and adjusted in temperature as required. For example, when the vessel 9 is rotated in a direction indicated by an arrow in Fig.4, the bran paste 10 within the vessel 9 is rotated and stirred while swirling inwardly and moreover continually generating suitable rents or separations and divisions. Therefore, if materials such as vegetables are thrown into the bran paste 10 without application of a special operation, then they are stirred into a uniform or homogeneous mixed condition in only several minutes.

The amount of bran paste 10 charged may be of 70 to 80% based on the volume of the vessel 9, and even in such a case, no problem will arise. For example, when 2,000 g of a bran, 4,000 to 4,500 g of water and 200 to 300 g of salt are charged in a vessel having a volume of 30 cm φ x 15 cm height, the unoccupied space is sufficient for the complete stirring.

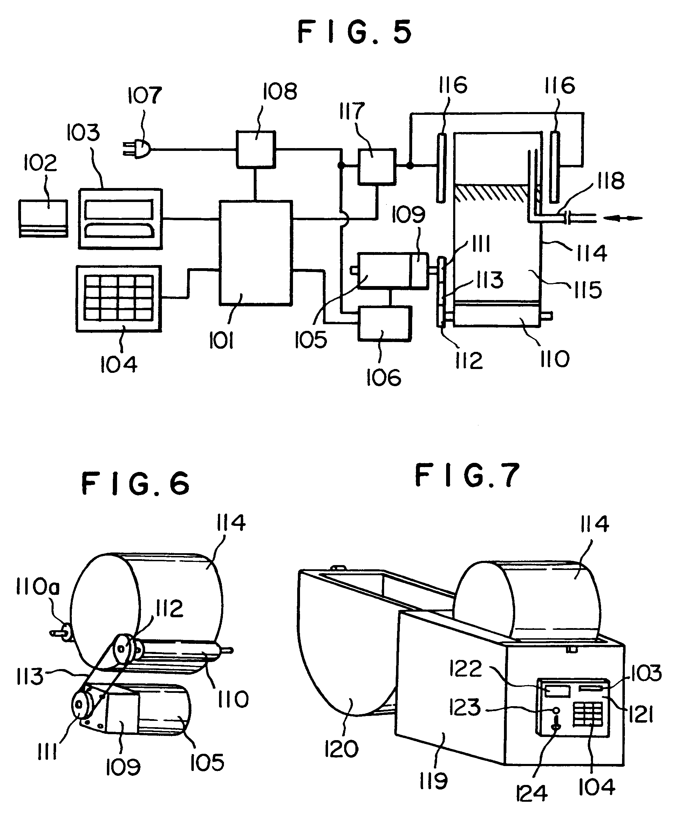

It should be understood that in the apparatus practising the method of the present invention, a CPU can be substituted for the rotational control unit 1 shown in Fig.1. Such an embodiment will now be described with reference to Figs.5 to 7.

Referring to Fig.5, a CPU is generally indicated by the reference numeral 101 and, wherein the content of a desired program recorded in a medium 102 is delivered therefrom via a card reader 103 and recorded into the CPU 101 to provide a selected process by the control program in CPU 101. An input keyboard 104 provides the starting of various required computer programs by manually depressing ten keys or function keys thereon. It is to be noted that the CPU 101 has a microcomputer system arranged at the central portion thereof and further includes an input/output function (I/O function) device, a memory and a switch network.

The reference numeral 105 is a rotary drive such as an induction motor, which is connected with the CPU 101 through a rotational speed control section 106, so that a control signal from the CPU 101 allows the rotational speed to be freely varied. More specifically, the rotational speed control section 106 is supplied with an AC current from an AC power source 107 via a branch circuit and a rate generator of the the rotational speed control section 106 is controlled by a control signal from the CPU 101 to freely vary the rotational speed of the rotary drive 105. The rotary shaft of the rotary drive 105 may be changed in speed by a gear box, as required.

The reference numeral 110 is a rotary member such as a rubber roller, which is connected with the rotary drive 105 by operatively connecting pulleys 111 and 112 with each other through a belt 113, as shown in Figs.5 and 6, so that the rotary member 110 is rotated by the rotary drive 105 through the pulley 111, the belt 113 and the pulley 112. This rotation is of course controlled by the rotation of the rotary drive 105. It is noted that a rubber roller 110a shown in Fig.6 serves as a mere roller even if it is not directly operatively connected to the rotary drive 105 by a belt.

The reference numeral 114 designates a vessel filled with a bran paste 115. The vessel 114 is placed on the rotary member 110 and held for rotation by the rotation of the rotary member 110. This permits the vessel 114 to be rotated in accordance with the rotational speed of the rotary member 110.

A temperature adjuster such as a thermo-module indicated at 116 is connected through a power source control section 117 to the CPU 101 and freely controls the temperature within the vessel 114 by a control signal from the CPU 101. More specifically, a signal for controlling the heat generation and absorption of the temperature adjuster 116 is transmitted from the CPU 101 to the power source control section 117, thereby allowing the power source control section 117 to reversely change the direction of the current to the temperature adjuster 116 and to provide the control of energization time. The power source control section 117 also includes therein a function for converting the AC current supplied from the AC power source 107 via the branch circuit 108 into a DC current suitable for the temperature adjuster 116. The reference numeral 114 designates a pipe used to replace the air within the vessel 114 by fresh air.

The above apparatus practising the method of the present invention is contained within an envelope 119, as shown in Fig.7. The reference numeral 120 is a lid for the vessel, 121 being a control panel, 122 being an indicator, 123 being an indicating lamp, and 124 being a source switch.

With the above apparatus practising the method of the present invention, the vessel 114 filled with the bran paste 115 is rotated or adjsuted in temperature as required, in the same manner as in the apparatus shown in Fig.1, according to a desired program recorded in the CPU 101.

### EXAMPLE

The same bran paste as described above was charged into the apparatus shown in Fig.1, and the apparatus was set selectively at rotational velocities of V1 (2 RPM), V2 (6 RPM), and V3 (10 RPM) at a temperature of 20^{o}C to compare the times required for products fermented in the bran paste to achieve identical finished tastes for a cucumber, a radish, a turnip, a pumpkin, and a carrot. The results are given in Table 1.

**Table 1**

| | Cucumber | Radish | Turnip | Pumpkin | Carrot |
|---|---|---|---|---|---|
| Size | about 2.5 cm φ | about 6 cm φ | about 6 cm φ | 2cm thick | about 1.0 to 1.5 cm φ |
| Length | about 16 cm | about 7 cm | - | combed | 8 cm |
| Cut | not | Lon. half | Half | - | not (full) |
| V0*(hr) | 12 - 18 | 15 - 24 | 18 | 24 - 48 | 12 |
| V1 (hr) | 8 | 10 | 8 | 12 | 8 |
| V2 (hr) | 4 - 6 | 6 | 4 - 6 | 8 | 4 - 6 |
| V3 (hr) | 2.5 | 4 | 3 | 6 | 3 |

| | | | | | |
|---|---|---|---|---|---|
| * Those in the case where the stirring was manually conducted in the same bran paste at a temperature of 20^{o}C "Lon. half" = longitudinally half cut, "Half" = Half cut | | | | | |

It can be seen from Table 1 that the fermenting in bran paste (V1 to V3) was considerably reduced in finishing time as compared with that (Vo) in the prior art. Moreover, any of the products (V1 to V3) in accordance with the present invention were satisfactory in taste.

## Claims

1. A method for producing fermented vegetables in a bran paste which comprises:
charging a bran paste (10) containing lactic acid bacteria into a vessel (9) having no slats in the inside thereof,
throwing vegetables to be fermented into the bran paste,
placing the vessel on a rotary member (5) connected with a rotary drive (3) and adapted to be rotated by the rotary drive,
rotating the vessel placed on the rotary member through the rotation of the rotary member; and
rotating and stirring the bran paste within the vessel while swirling inwardly and continually generating suitable rents or separations and divisions.

2. A method for producing fermented vegetables according to claim 1, wherein adjusting the envelomental temperature of the vessel (9) at any place of the vessel with a temperature adjuster (11) so that the bran paste in the vessel can be constantly maintained at a desired temperature.

3. A method for producing fermented vegetables according to claim 1, wherein said rotary drive (3) is connected through a rotational speed control section (2) with a CPU (1) having a desired program stored therein, so that the rotational speed can be freely varied by a control signal from said CPU.

4. A method for producing fermented vegetables according to claim 1, wherein the amount of bran paste charged is of 70 to 80 percents based on the volume of the vessel.

## Patentansprüche

1. Verfahren zur Herstellung von fermentierten Gemüsen in einer Kleiepaste, wobei folgendes vorgesehen ist:
Eingeben einer Milchsäurebakterien enthaltenden Kleiepaste (10) in ein Gefäß (9), welches an seiner Innenseite keine Leisten aufweist;
Hineinwerfen der zu fermentierenden Gemüse in die Kleiepaste;
Anordnen des Gefäßes auf einem mit einem Drehantrieb (3) verbundenen Drehglied (5), wobei das Gefäß zur Drehung durch den Drehantrieb geeignet ist;
Drehung des auf den Drehglied angeordenten Gefäßes infolge der Drehung des Drehgliedes, und
Rotation und Rühren der Kleiepaste innerhalb des Gefäßes während des nach innengerichteten Wirbelns und kontinuierliches Erzeugens geeigneter Spalten oder Trennungen und Unterteilungen.

2. Verfahren zur Herstellung von fermentierten Gemüsen nach Anspruch 1, wobei die Einstellung der Umgebungstemperatur des Gefäßes (9) an irgendeiner Stelle des Gefäßes mit einer Temperatureinstellvorrichtung (11) derart erfolgt, daß die Kleiepaste im Gefäß konstant auf einer gewünschten Temperatur gehalten werden kann.

3. Verfahren zur Herstellung von fermentierten Gemüsen nach Anspruch 1, wobei der Drehantrieb (3) über einen Drehzahlsteuerabschnitt mit einer zentralen Verarbeitungseinheit (1) verbunden ist, die ein gewünschtes Programm darinnen derart gespeichert besitzt, daß die Drehzahl frei durch ein Steuersignal von der zentralen Verarbeitungseinheit verändert werden kann.

4. Verfahren zur Herstellung von fermentierten Gemüsen nach Anspruch 1, wobei die Menge der in das Gefäß eingegebenen Kleiepaste 70 % bis 80 % basierend auf dem Gefäßvolumen ausmacht.

## Revendications

1. Procédé de fabrication de légumes fermentés dans une pâte au son, comprenant les étapes qui consistent :
à charger une pâte au son (10) contenant des bactéries d'acide lactique dans un récipient (9) dont la partie intérieure est dépourvue de nervures ;
à verser des légumes devant fermenter dans la pâte au son ;
à placer le récipient sur un élément rotatif (5) relié à un dispositif tournant d'entraînement (3) et adapté pour être entraîné en rotation par le dispositif tournant d'entraînement, à faire tourner le récipient placé sur l'élément rotatif en faisant tourner ce dernier ; et
à faire tourner et à brasser la pâte au son placée à l'intérieur du récipient tout en provoquant des remous vers l'intérieur et en produisant des brisures ou déchirures et des morcellements appropriés.

2. Procédé de fabrication de légumes fermentés selon la revendication 1, dans lequel le réglage de la variation de température du récipient (9) en un endroit quelconque de ce dernier est effectué au moyen d'un régulateur de température (11) de telle sorte que la pâte au son dans le récipient est maintenue en permanence à une température souhaitée.

3. Procédé de fabrication de légumes fermentés selon la revendication 1, dans lequel ledit dispositif d'entraînement tournant (3) est connecté par l'intermédiaire d'une section (2) de commande de vitesse de rotation à une unité centrale (1) CPU dans laquelle est stocké un programme désiré, de telle sorte que la vitesse de rotation peut varier librement sous l'action d'un signal de commande provenant dudit CPU.

4. Procédé de fabrication de légumes fermentés selon la revendication 1, dans lequel la quantité de pâte au son chargée occupe 70 à 80 pour cent du volume du récipient.
